(19) Europäisches Patentamt
European Patent Office
Office européen des brevets

(11) Veröffentlichungsnummer: **0 414 048 B1**

# (12) EUROPÄISCHE PATENTSCHRIFT

(45) Veröffentlichungstag der Patentschrift: **12.10.94**

(51) Int. Cl.5: **C09K 19/42**, C09K 19/30, G02F 1/137

(21) Anmeldenummer: **90115213.2**

(22) Anmeldetag: **08.08.90**

## (54) Matrix-Flüssigkristallanzeige.

(30) Priorität: **22.08.89 DE 3927674**

(43) Veröffentlichungstag der Anmeldung:
**27.02.91 Patentblatt 91/09**

(45) Bekanntmachung des Hinweises auf die Patenterteilung:
**12.10.94 Patentblatt 94/41**

(84) Benannte Vertragsstaaten:
**DE GB**

(56) Entgegenhaltungen:
**EP-A- 0 365 962**
**EP-A- 0 366 985**
**WO-A-89/03867**
**WO-A-89/08692**
**WO-A-89/09360**
**WO-A-91/00898**
**DE-A- 3 221 462**

(73) Patentinhaber: **MERCK PATENT GmbH**
**Postfach,**
**Frankfurter Strasse 250**
**D-64271 Darmstadt (DE)**

(72) Erfinder: **Hittich, Reinhard**
**Am Kirchberg 11**
**D-6101 Modautal (DE)**
Erfinder: **Weber, Georg**
**Wilhelm-Leuschner-Str. 38**
**D-6106 Erzhausen (DE)**
Erfinder: **Plach, Herbert**
**Wingertsbergstr. 5**
**D-6100 Darmstadt (DE)**
Erfinder: **Wächtler, Andreas**
**Goethestrasse 34**
**D-6103 Griesheim (DE)**
Erfinder: **Scheuble, Bernhard**
**Grundweg 3**
**D-6104 Seeheim-Jugenheim (DE)**

**EP 0 414 048 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Matrix-Flüssigkristallanzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

dadurch gekennzeichnet, daß die Flüssigkristallmischung auf folgenden Komponenten basiert:

a) bis zu 96 Gew.% einer flüssigkristallinen <u>Komponente B</u> bestehend aus einer oder mehreren Verbindungen mit einer dielektrischen Anisotropie von über +1,5,

b) 0 bis 70 Gew.% einer flüssigkristallinen <u>Komponente A</u> bestehend aus einer oder mehreren Verbindungen mit einer dielektrischen Anisotropie von -1,5 bis +1,5 der allgemeinen Formel I

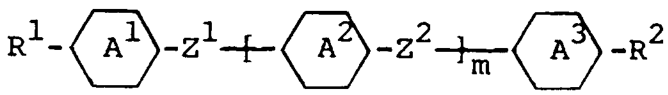 I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$ oder eine Einfachbindung, und |
| m | 0, 1 oder 2 bedeutet, |

c) 0 bis 20 Gew.% einer flüssigkristallinen <u>Komponente C</u> bestehend aus einer oder mehreren Verbindungen mit einer dielektrischen Anisotropie von unter -1,5, und

d) 4 bis 15 Gew.% einer hochklärenden Komponente D bestehend aus einer oder mehreren Verbindungen der Formel

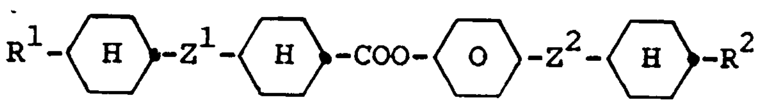

worin $R^1$, $R^2$, $Z^1$ und $Z^2$ die bei Formel I angegebene Bedeutung haben,

und die nematische Flüssigkristallmischung einen nematischen Phasenbereich von mindestens 60 °C und eine Viskosität bei 20 °C von maximal 30 mPa.s aufweist.

Matrix-Flüssigkristallanzeigen (MFK-Anzeigen) gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polaristoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung.

Der Erfindung liegt die Aufgabe zugrunde, MFK-Anzeigen bereitzustellen, die die oben angegebenen Nachteile nicht oder nur in geringerem Maße und gleichzeitig sehr hohe spezifische Widerstände aufweisen.

MFK-Anzeigen mit aktiver Matrix bzw. entsprechende esterfreie Flüssigkristallmischungen mit hohem spezifischen Widerstand sind aus EP-A-0 365 962 bekannt.

Es wurde nun gefunden, daß die Ester-Komponente D denn Arbeitstemperaturbereich deutlich erweitert bei Erhalt des hohen spezifischen Widerstandes.

Es wurde nun gefunden, daß diese Aufgabe gelost werden kann, wenn man in diesen Anzeigelementen nematische Flüssigkristallmischungen verwendet, die auf den o.a. Komponenten A, B und C, B und A, bzw. B basieren.

Der Gegenstand der Erfindung ist somit eine MFK-Anzeige mit

- zwei planparallelen Trägerplatten, die mit einer Umrandung eine Zelle bilden,
- integrierten nicht-linearen Elementen zur Schaltung einzelner Bildpunkte auf den Tragerplatten und
- einer in der Zelle befindlichen nematischen Flüssigkristallmischung mit positiver dielektrischer Anisotropie und hohem spezifischem Widerstand,

dadurch gekennzeichnet, daß die Flüssigkristallmischung auf folgenden Komponenten basiert:

a) bis zu 96 Gew.% einer flüssigkristallinen Komponente B bestehend aus einer oder mehreren Verbindungen mit einer dielektrischen Anisotropie von über +1,5,

b) 0 bis 70 Gew.% einer flüssigkristallinen Komponente A bestehend aus einer oder mehreren Verbindungen mit einer dielektrischen Anisotropie von -1,5 bis +1,5 der allgemeinen Formel I

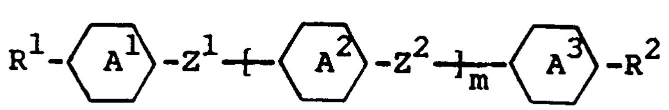 I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$ oder eine Einfachbindung, und |
| m | 0, 1 oder 2 bedeutet, |

c) 0 bis 20 Gew.% einer flüssigkristallinen Komponente C bestehend aus einer oder mehreren Verbindungen mit einer dielektrischen Anisotropie von unter -1,5, und

d) 4 bis 15 Gew.% einer hochklärenden Komponente D bestehend aus einer oder mehreren Verbindungen der Formel

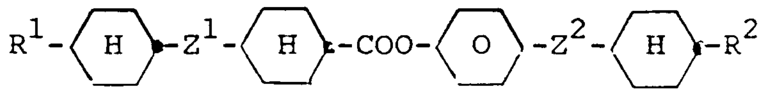

worin $R^1$, $R^2$, $Z^1$ und $Z^2$ die bei Formel I angegebene Bedeutung haben, und die nematische Flüssigkristallmischung einen nematischen Phasenbereich von mindestens 60 °C und eine Viskosität bei 20 °C von maximal 30 mPa.s aufweist.

Gegenstand der Erfindung sind auch entsprechende Flüssigkristallmischungen, insbesondere zur Verwendung in MFK-Anzeigen. Die Mischungen eignen sich jedoch auch für viele andere Anwendungen, wie z.B. TN, STN oder OMI.

Der spezifische Widerstand von Flüssigkristallmischungen ist im allgemeinen hoch, wenn die dielektrische Anisotropie klein ist, da die in Mischungen mit hohem $\Delta\epsilon$ vorhandenen polaren Komponenten stabilisierend auf Ionen wirken und somit eine hohe Leitfähigkeit bzw. einen niedrigen Widerstand bedingen. Es wurde nun überraschend gefunden, daß der spezifische Widerstand dann besonders hoch ist, wenn die mittlere Dielektrizitätskonstante $\bar{\epsilon}$ [= $\frac{1}{3}$ ( 2 $\epsilon_{\perp}$ + $\epsilon_{||}$ )] klein ist und gleichzeitig die dielektrisch neutralen ($\Delta\epsilon$ von -1,5 bis +1,5) Komponenten der Flüssigkristallmischung keine funktionellen Gruppen wie zum Beispiel aromatisch gebundenes Alkoxy oder Ester-Funktionenenthalten. Die dielektrisch positiven ($\Delta\epsilon \geqq 1{,}5$) Komponenten tragen üblicherweise terminale Cyan-Gruppen. Vorzugsweise werden in den erfindungsgemäßen Mischungen jedoch neben den Verbindungen mit terminalem Cyan auch solche mit terminalem -NCS, F, Cl, $-CF_3$, $-CHF_2$, $-OCF_3$, $-OCHF_2$, $-OCF_2CF_2H$ oder $-OC_2F_5$ eingesetzt.

Komponente B kann jedoch auch im wesentlichen nur aus nitrilhaltigen Verbindungen bestehen, wobei diejenigen Verbindungen der Formeln IIa bis IIf mit X = CN bevorzugt sind. In diesem Fall besteht die Flüssigkristallmischung im wesentlichen aus den Komponenten A, B und C, bzw. A und B.

Besonders bevorzugt sind Flüssigkristallmischungen enthaltend nitrilhaltige und nitrilfreie, fluorierte Verbindungen, wobei letztere vorzugsweise den Formeln IIa bis IIf entsprechen, worin X F, Cl, $-CF_3$, $-CHF_2$, $-OCF_3$, $-OCHF_2$, $-OCF_2CF_2H$ oder $-OC_2F_5$ bedeutet.

Das Verhältnis nitrilfreie : nitrilhaltige Verbindungen aus Komponente B ist vorzugsweise > 1 : 1, insbesondere > 2 : 1. Besonders bevorzugte Bereiche sind 2,5 : 1 bis 6 : 1.

Ganz besonders bevorzugt sind jedoch Flüssigkristallmischungen, deren Komponente B im wesentlichen aus nitrilfreien, fluorierten Verbindungen besteht. Vorzugsweise kommen die oben genannten bevorzugten Verbindungen der Formeln IIa bis IIf zum Einsatz.

'Im wesentlichen' soll bedeuten, daß der Anteil weiterer Verbindungen in der entsprechenden Komponente ≦ 20 %, insbesondere ≦ 10 % ist.

Weiterhin bevorzugt sind Flüssigkristallmischungen deren Komponente B terminal chlorierte Verbindungen enthält. Derartige Verbindungen sind dem Fachmann bekannt und entsprechen vorzugsweise den Formeln IIa bis IIf mit X = Cl. In einer besonders bevorzugten Ausführungsform enthalten die Mischungen eine oder mehrere Verbindungen der Formel IIa bis IIf, worin $A^2$-X bzw.

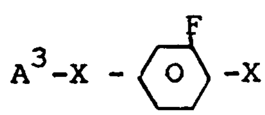

mit X = $CF_3$, $-OCF_3$, $-OCHF_2$ oder Cl bedeutet. Komponente B kann ferner noch 4-kernige Verbindungen enthalten, z.B. entsprechend den Formeln IIc bis IIf, worin einer der Ringe $X^1$ bis $A^3$ doppelt vorhanden ist.

In einer besonders bevorzugten Ausführungsform enthalten die Mischungen Verbindungen mit terminalem Nitril in einem Anteil von 0 bis 50 Gew. % in Komponente B. Besonders bevorzugt sind Mischungen, die keine Verbindungen mit terminalem Nitril enthalten. Überraschenderweise wurde gefunden, daß Gruppen wie $-OCF_3$, $-OCHF_2$, $-OCF_2CF_2H$ oder $-OC_2F_5$ Ionen in den Displays bedeutend weniger stabilisieren als $-OCH_3$ bzw. $-OC_2H_5$. Dasselbe gilt auch für aliphatisch gebundenes Alkoxy (Verbindungen der Formeln III und IV).

Die erfindungsgemäßen Mischungen haben vorzugsweise einen spezifischen Widerstand bei 20° von ≧ $10^{12}$ Ω . cm, insbesondere bevorzugt > $10^{13}$ Ω . cm. Das mittlere $\epsilon$ ist vorzugsweise ≦ 7, insbesondere bevorzugt ≦ 5.

Die Werte der dielektrischen Anisotropie der einzelnen Verbindungen der Komponenten A bis D werden bei 20° bestimmt durch Extrapolation aus einer polaren Mischung (enthaltend 24 % p-trans-4-Propylcyclohexylbenzonitril, 36 % p-trans-4-Pentylcyclohexylbenzonitril, 25 % p-trans-4-Heptylcyclohexylbenzonitril und

15 % 4-Cyan-4'-(trans-4-pentylcyclohexyl)-biphenyl), falls die zu bestimmende Verbindung einen Dipol in der Längsachse des Moleküls enthält, bzw. aus einer neutralen Mischung (enthaltend 22 % trans-1-p-Ethylphenyl-4-propylcyclohexan, 20 % trans-1-p-Methoxyphenyl-1-propylcyclohexan, 15 % trans-1-p-Ethoxyphenyl-4-propylcyclohexan, 19 % 4-Ethyl-4-(trans-4-propylcyclohexyl)-biphenyl, 14 % 4-Ethyl-4'-(trans-4-pentylcyclohexyl)-biphenyl, 5 % 4,4'-Bis-(trans-4-propylcyclohexyl)-biphenyl und 5 % 4-(trans-4-Pentylcyclohexyl)-4'-(trans-4-propylcyclohexyl)-biphenyl) bei neutralen Verbindungen.

Die erfindungsgemäßen Flüssigkristallmischungen ermöglichen es bei niedrigen Viskositäten gleichzeitig einen hohen Wert für den spezifischen Widerstand zu erreichen, wodurch hervorragende MKF-Anzeigen erzielt werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -20° bis +70°.

Die einzelnen Verbindungen der Formeln I bis IV und deren Unterformeln, die in den erfindungsgemäßen MFK-Anzeigen verwendet werden können, sind entweder bekannt, oder sie können analog zu den bekannten Verbindungen hergestellt werden.

Bevorzugte erfindungsgemäß verwendbare Flüssigkristallmischungen enthalten insgesamt vorzugsweise 10 % bis 70 %, insbesondere 10 % bis 40 % an Verbindungen der Formel I. Falls Komponente B nicht überwiegend aus stark dielektrisch positiven Nitrilkomponenten zusammengesetzt ist, sondern überwiegend nur schwach dielektrisch positive Verbindungen wie zum Beispiel die im folgenden angegebenen fluorierten Verbindungen enthält, kann Komponente A unter Umständen ganz entfallen und die erfindungsgemäßen Mischungen in dieser besonderen Ausführungsform lediglich auf Komponente B und ggf. Komponente C basieren. Besonders bevorzugt sind Flüssigkristallmischungen, deren Komponente B eine oder mehrere Verbindungen ausgewählt aus der Gruppe bestehend aus Verbindungen der Formeln IIa bis IIf enthält,

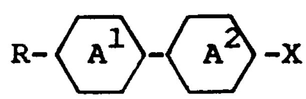
IIa

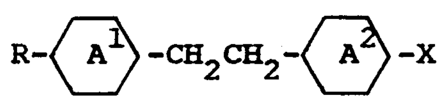
IIb

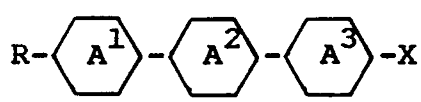
IIc

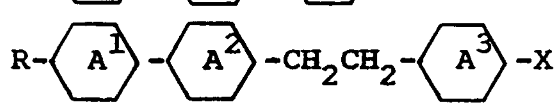
IId

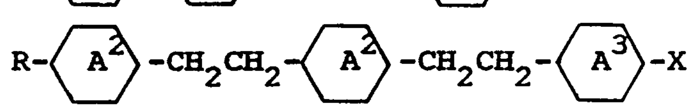
IIe

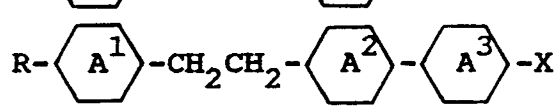
IIf

worin

| | |
|---|---|
| R | n-Alkyl oder n-Alkenyl mit bis zu 9 C-Atomen, |
| X | Cyan, -NCS, F, Cl, $-CF_3$, $-CHF_2$, $-OCF_3$, $-OCHF_2$, $-OCF_2CF_2H$ oder $-OC_2F_5$, und |
| die Ringe $A^1$, $A^2$ und $A^3$ | jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen bedeuten. |

Vorzugsweise enthält Komponente B Verbindungen der Formeln IIa bis IIf, worin X Cyan bedeutet, und Verbindungen der Formeln IIa bis IIf, worin X -NCS, F, Cl, $-CF_3$, $-CHF_2$, $-OCF_3$, $-OCHF_2$, $-OCF_2CF_2H$ oder $-OC_2F_5$ bedeutet, und der Anteil der Cyanverbindungen in Komponente B beträgt 0 bis 50 Gew.%.

In einer besonders bevorzugten Ausführungsform enthält Komponente B keine Verbindungen der Formeln IIa bis IIf, worin X Cyan bedeutet.

In den Verbindungen der Teilformeln IIa bis IIf bedeutet X vorzugsweise F, Cl, $CF_3$, $-OCF_3$, $-OCHF_2$ oder $CHF_2$.

Die Ringe $A^1$, $A^2$ und $A^3$ bedeuten vorzugsweise jeweils unabhängig voneinander trans-1,4-Cyclohexylen oder 1,4-Phenylen. Einer der Ringe $A^1$, $A^2$ und $A^3$ ist in einer bevorzugten Ausführungsform 2- oder 3-Fluor-1,4-phenylen oder 2,3-Difluor-1,4-phenylen. Der mit X verbundene Ring (d.h. $A^2$ in IIa und IIb bzw. $A^3$ in IIc bis IIf) ist vorzugsweise 1,4-Phenylen, welches ggf. auch durch Fluor ein- oder zweifach substituiert sein kann. $A^2$-X bzw. $A^3$-X ist vorzugsweise eine Gruppe ausgewählt an den Formeln (a) bis (h):

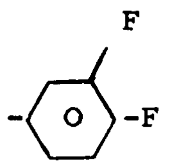
(a)

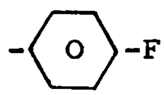
(b)

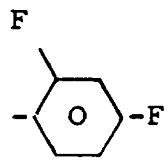
(c)

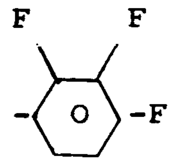
(d)

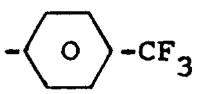
(e)

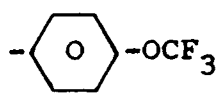
(f)

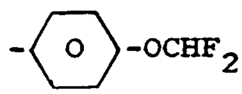
(g)

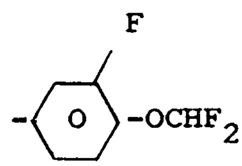
(h)

wobei (a), (b), (d), (f), (g) und (h) besonders bevorzugt sind.

Besonders bevorzugte kleinere Gruppen von Verbindungen sind im folgenden angegeben:

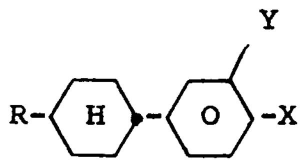

IIa1

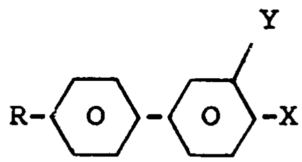

IIa2

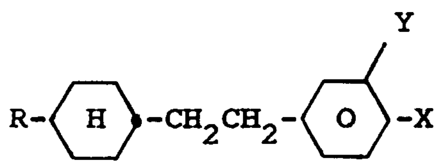

IIb1

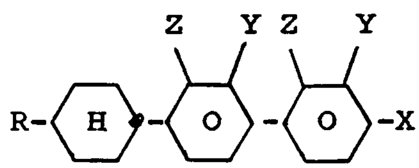

IIc1

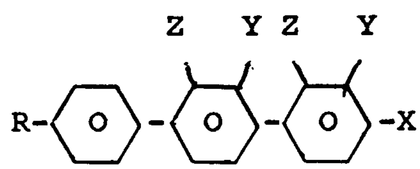

IIc2

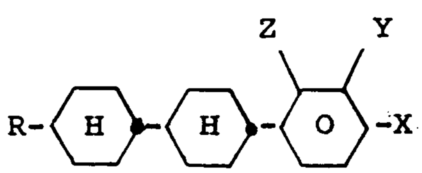

IIc3

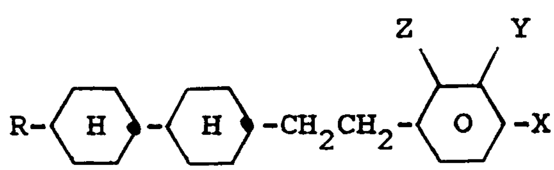

Id1

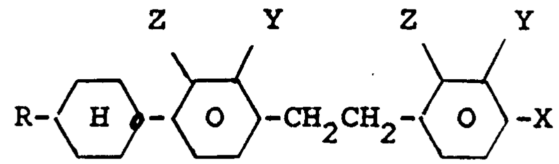

Id2

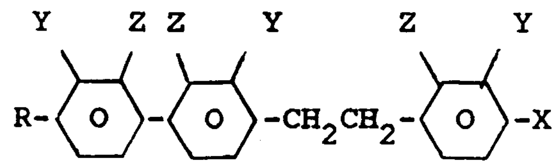

Id3

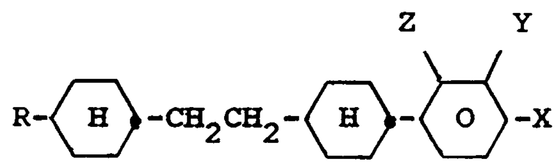

If1

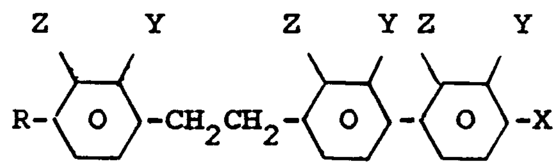

IIf2

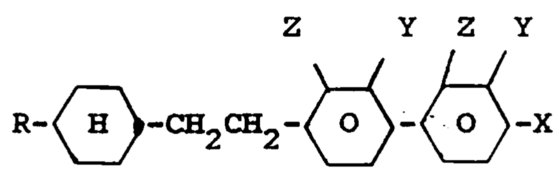

IIf3

In den Teilformeln IIa1 bis IIf3 bedeutet R jeweils n-Alkyl oder n-Alkenyl mit bis zu 9 C-Atomen. Y und Z sind jeweils unabhängig voneinander H oder F, wobei jedoch vorzugsweise einer oder zwei der Reste Y und Z Fluor bedeuten. X ist jedoch vorzugsweise F, Cl, $-CF_3$-, $-OCF_3$ oder $-OCHF_2$.

Komponente B macht vorzugsweise 10 % bis 100 %, insbesondere 20 % bis 80 % der erfindungsgemäßen Mischungen aus.

Komponente A enthält vorzugsweise eine oder mehrere Verbindungen ausgewählt aus der Gruppe bestehend aus II1 bis II7:

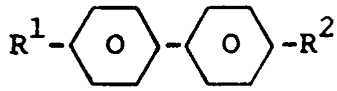 II1

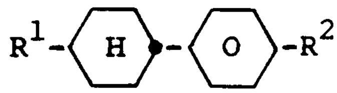 II2

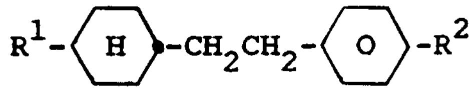 II3

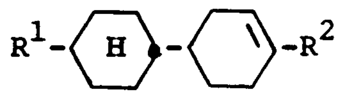 II4

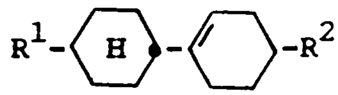 II5

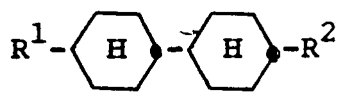 II6

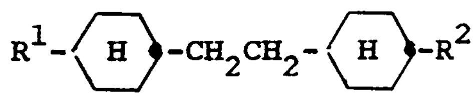 II7

worin $R^1$ und $R^2$ die in Anspruch 1 angegebene Bedeutung haben.

Vorzugsweise enthält Komponente A zusätzlich eine oder mehrere Verbindungen ausgewählt aus der Gruppe bestehend aus II8 bis II20:

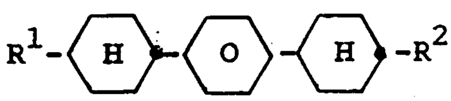 II8

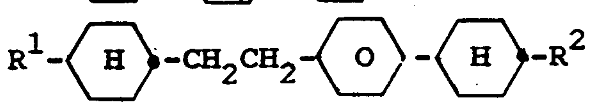 II9

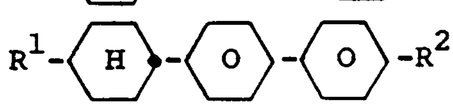 II10

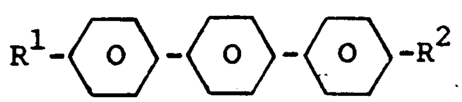 II11

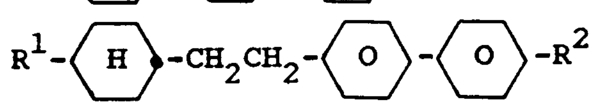 II12

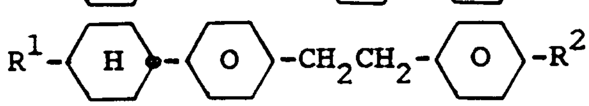 II13

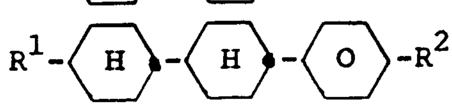 II14

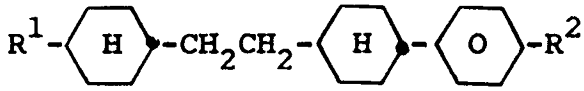 II15

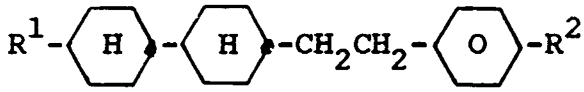 II16

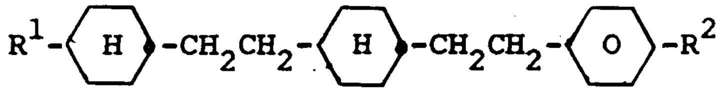 II17

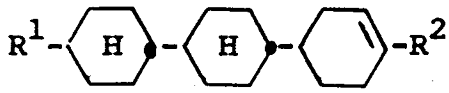 II18

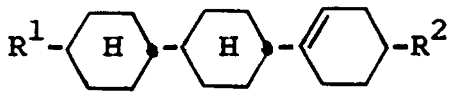 II19

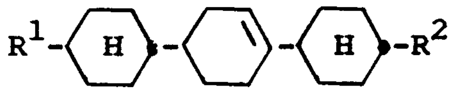 II20

worin $R^1$ und $R^2$ die in Anspruch 1 angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

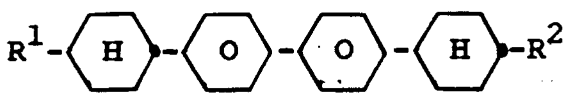 II21

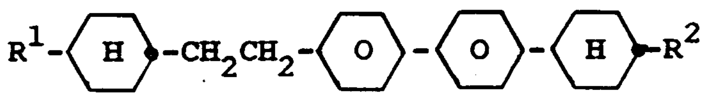 II22

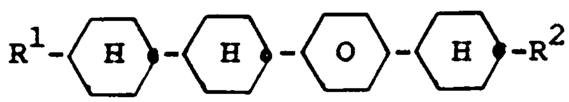 II23

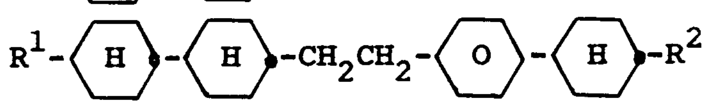 II24

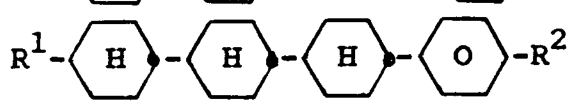 II25

worin $R^1$ und $R^2$ die in Anspruch 1 angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

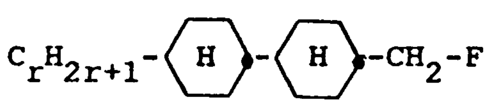 II26

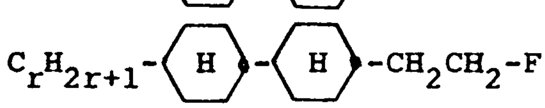 II27

worin $C_rH_{2r+1}$ eine geradkettige Alkylgruppe mit bis zu 7 C-Atomen ist.

In einigen Fällen erweist es sich den Zusatz von Verbindungen der Formel

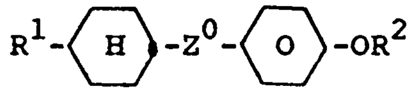

worin
$R^1$ und $R^2$ die in Anspruch 1 angegebene Bedeutung haben und
$Z^0$ eine Einfachbindung, $-CH_2CH_2-$,

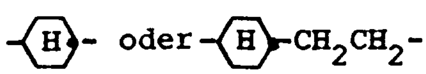

bedeutet,
zur Unterdrückung smektischer Phasen als vorteilhaft, obwohl hierdurch der spezifische Widerstand erniedrigt wird. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die neben den Komponenten A, B und C zusätzlich eine oder mehrere Verbindungen ausgewählt aus der Gruppe bestehend aus III und IV enthalten:

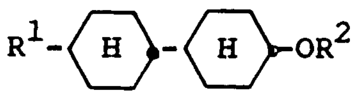 III

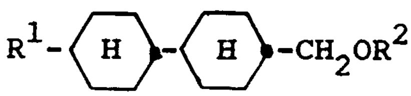 IV

worin $R^1$ und $R^2$ die oben angegebene Bedeutung haben, und/oder eine oder mehrere Verbindungen ausgewählt aus der Gruppe bestehend aus V und VI

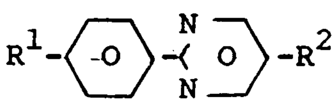 V

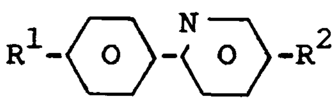 VI

worin $R^1$ und $R^2$ die oben angegebene Bedeutung haben, und/oder eine oder mehrere Verbindungen ausgewählt aus der Gruppe bestehend aus VII bis XI enthalten

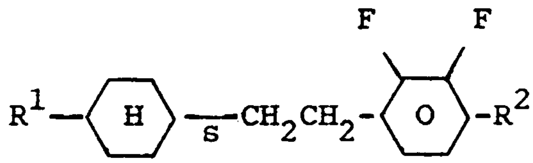

VII

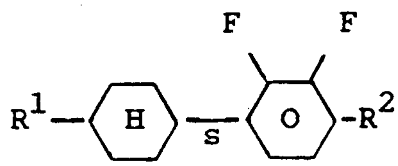

VIII

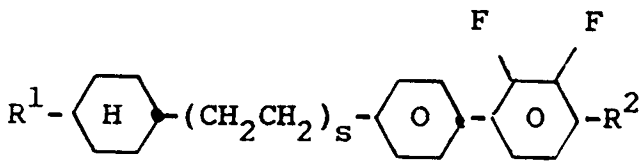

IX

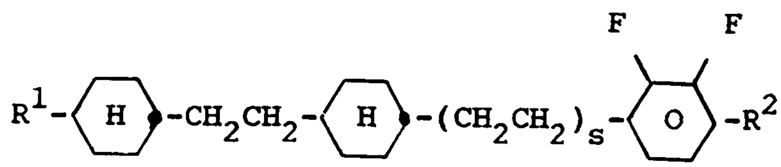

X

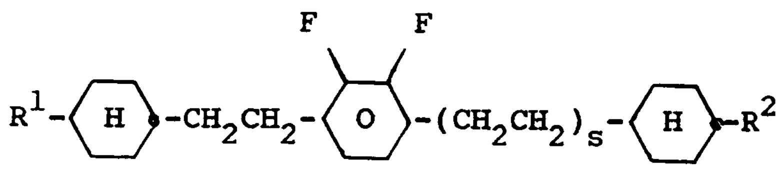

XI

worin $R^1$ und $R^2$ die oben angegebene Bedeutung haben und s 0 oder 1 ist.

Der Anteil der Verbindungen der Formeln III bis XI in den erfindungsgemäßen Mischungen (bevorzugte Bereiche) geht aus folgender Tabelle hervor:

Summe der Verbindungen III und IV: 0 % bis 40 %, vorzugsweise 10 % bis 30 %
Summe der Verbindungen V und VI: 0 % bis 40 %, vorzugsweise 5 % bis 20 %
Summe der Verbindungen VII bis XI: 0 % bis 20 %, vorzugsweise 5 % bis 15 %

Der Anteil der Komponente D ist vorzugsweise 5 bis 12 Gew.%, vorzugsweise werden zwei oder mehr Homologe der Komponente D angesetzt. Komponente D kann die folgenden bevorzugten Verbindungen D1, D2 und D3 enthalten:

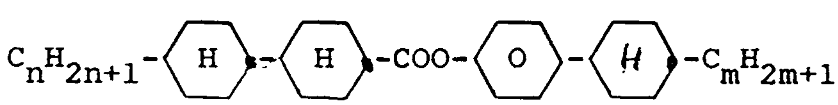

D1

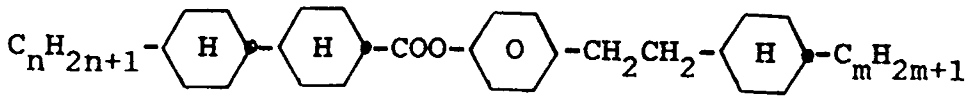

D2

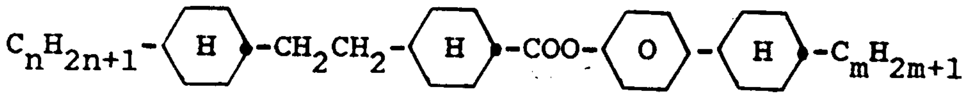

D3

n und m sind jeweils unabhängig voneinander vorzugsweise 2, 3, 4 oder 5. Bevorzugte Kombinationen für n und m sind: 3/3, 3/4, 3/5, 2/3, 4/3, 5/3,/3/2. D1 ist besonders bevorzugt.

Es versteht sich von selbst, daß die erfindungsgemäßen Mischungen, die vorzugsweise im wesentlichen aus den für die Komponente A bis D angegebenen bevorzugten Verbindungen bestehen, gegebenenfalls auch noch weitere, hier nicht explizit genannte Verbindungen enthalten können. In vielen Fällen resultieren jedoch dann ungünstigere Eigenschaften. Der Fachmann kann leicht feststellen, ob und ggf. in welchen Mengen weitere Verbindungen zum Einsatz kommen können.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

Im folgenden ist die Zusammensetzung der Mischungen der Beispiele 1 bis 25 angegeben, wobei die einzelnen Verbindungen wie folgt codiert sind:

| | |
|---|---|
| PCH-301: | trans-1-p-Methoxyphenyl-4-propylcyclohexan |
| CCH-301: | trans,trans-4-Methoxy-4′-propylcyclohexylcyclohexan |
| CBC-33F: | 4,4′-Bis-(trans-4-propylcyclohexyl)-2-fluorbiphenyl |
| CBE-55F: | 4,4′-Bis-(trans-4-pentylcyclohexyl)-2-fluorbiphenyl |
| CBC-53F: | 4-(trans-4-Pentylcyclohexyl)-4′-(trans-4-propylcyclcohexyl)-2-fluorbiphenyl |
| CBC-33: | 4,4′-Bis-(trans-4-propylcyclohexyl)-biphenyl |
| CBC-55: | 4,4′-Bis-(trans-4-pentylcyclohexyl)-biphenyl |
| CBC-53: | 4-(trans-4-Pentylcyclohexyl)-4′-(trans-4-propylcyclohexyl)-biphenyl |
| ECCP-33: | 1-[trans-4-(trans-4-Propylcyclohexyl)-cyclohexyl]-2-(p-propylphenyl)-ethan |
| CCH-51F: | trans,trans-4-Fluormethyl-4′-pentylcyclohexylcyclohexan |
| CCH-31F: | trans,trans-4-Fluormethyl-4′-propylcyclohexylcyclohexan |
| PTP-102: | 4-Methyl-4′-ethoxy-tolan |
| PTP-201: | 4-Methoxy-4′-ethyl-tolan |
| CPTP-301: | 4-(trans-4-Propylcyclohexyl)-4′-methoxytolan |
| CPTP-302: | 4-(trans-4-Propylcyclohexyl)-4′-ethoxytolan |
| CPTP-303: | 4-(trans-4-Propylcyclohexyl)-4′-propoxytolan |
| PCH-5F: | trans-1-p-Fluorphenyl-4-pentylcyclohexan |
| PCH-6F: | trans-1-p-Fluorphenyl-4-hexylcyclohexan |
| PCH-7F: | trans-1-p-Fluorphenyl-4-heptylcyclohexan |
| EPCH-20CF$_3$: | 1-(trans-4-Ethylcyclohexyl)-2-(p-trifluormethoxyphenyl)-ethan |

| | |
|---|---|
| EPCH-3OCF$_3$: | 1-(trans-4-Propylcyclohexyl)-2-(p-trifluormethoxyphenyl)-ethan |
| EPCH-5OCF$_3$: | 1-(trans-4-Pentylcyclohexyl)-2-(p-trifluormethoxyphenyl)-ethan |
| EPCH-7OCF$_3$: | 1-(trans-4-Heptylcyclohexyl)-2-(p-trifluormethoxyphenyl)-ethan |
| PCH-3OCF$_3$: | trans-1-p-Trifluormethoxyphenyl-4-propylcyclohexan |
| PCH-5OCF$_3$: | trans-1-p-Trifluormethoxyphenyl-4-pentylcyclohexan |
| ECCP-3OCF$_3$: | 1-[trans-4-(trans-4-Propylcyclohexyl)-cyclohexyl]-2-(p-trifluormethoxyphenyl)-ethan |
| ECCP-5OCF$_3$: | 1-[trans-4-(trans-4-Pentylcyclohexyl)-cyclohexyl]-2-(p-trifluormethoxyphenyl)-ethan |
| CCP-2OCF$_3$: | p-[trans-4-(trans-4-Ethylcyclohexyl)-cyclohexyl]-trifluormethoxybenzol |
| CCP-3OCF$_3$: | p-[trans-4-(trans-4-Propylcyclohexyl)-cyclohexyl]-trifluormethoxybenzol |
| CCP-4OCF$_3$: | p-[trans-4-(trans-4-Butylcyclohexyl)-cyclohexyl]-trifluormethoxybenzol |
| CCP-5OCF$_3$: | p-[trans-4-(trans-4-Pentylcyclohexyl)-cyclohexyl]-trifluormethoxybenzol |
| BCH-3OCF$_3$: | 4-Trifluormethoxy-4′-(trans-4-propylcyclohexyl)-biphenyl |
| ECCP-3F.F: | 1-[trans-4-(trans-4-Propylcyclohexyl)-cyclohexyl]-2-(3,4-difluorphenyl)-ethan |
| ECCP-5F.F: | 1-[trans-4-(trans-4-Pentylcyclohexyl)-cyclohexyl]-2-(3,4-difluorphenyl)-ethan |
| CCP-3F.F: | 4-[trans-4-(trans-4-Propylcyclohexyl)-cyclohexyl]-1,2-difluorbenzol |
| CCP-5F.F: | 4-[trans-4-(trans-4-Pentylcyclohexyl)-cyclohexyl]-1,2-difluorbenzol |
| CCP-3F: | 4-[trans-4-(trans-4-Propylcyclohexyl)-cyclohexyl]-fluorbenzol |
| ECCP-3F: | 1-[trans-4-(trans-4-Propylcyclohexyl)-cyclohexyl]-2-(p-fluorphenyl)-ethan |
| ECCP-5F: | 1-[trans-4-(trans-4-Pentylcyclohexyl)-cyclohexyl]-2-(p-fluorphenyl)-ethan |
| CP-3F: | trans-4-(trans-4-Propylcyclohexyl)-cyclohexancarbonsäure-(p-fluorphenylester) |
| CP-5F: | trans-4-(trans-4-Pentyl cyclohexyl)-cyclohexancarbonsäure-(p-fluorphenylester) |
| PYP-5F: | 2-p-Fluorphenyl-5-pentylpyrimidin |
| PYP-6F: | 2-p-Fluorphenyl-5-hexylpyrimidin |
| PYP-7F: | 2-p-Fluorphenyl-5-heptylpyrimidin |
| PYF-3OCF$_3$: | 2-p-Trifluormethoxyphenyl-5-propylpyrimidin |
| PYP-5OCF$_3$: | 2-p-Trifluormethoxyphenyl-5-pentylpyrimidin |
| PYP-7OCF$_3$: | 2-p-Trifluormethoxyphenyl-5-heptylpyrimidin |
| PCH-2: | p-trans-4-Ethylcyclohexyl-benzonitril |
| PCH-3: | p-trans-4-Propylcyclohexyl-benzonitril |
| PCH-4: | p-trans-4-Butylcyclohexyl-benzonitril |
| PCH-5: | p-trans-4-Pentylcyclohexyl-benzonitril |
| ECCP-3: | 1-[trans-4-(trans-4-Propylcyclohexyl)-cyclohexyl]-2-(p-cyanphenyl)-ethan |
| ECCP-3CF$_3$: | 1-[trans-4-(trans-4-Propylcyclohexyl)-cyclohexyl]-2-(p-trifluormethylphenyl)-ethan |
| ECCP-5CF$_3$: | 1-[trans-4-(trans-4-Pentylcyclohexyl)-cyclohexyl]-2-(p-trifluormethylphenyl)-ethan |
| PYP-5N.F: | 2-(3-Fluor-4-cyanphenyl)-5-pentylpyrimidin |
| PYP-7N.F: | 2-(3-Fluor-4-cyanphenyl)-5-heptylpyrimidin |
| PCH-3OCF$_2$: | trans-1-p-Difluormethoxyphenyl-4-propylcyclohexan |
| PCH-5OCF$_2$: | trans-1-p-Difluormethoxyphenyl-4-pentylcyclohexan |
| CCPC-33: | trans-(trans-4-Propylcyclohexyl)-cyclohexancarbonsäure -p-(trans-4-propylcyclohexyl)-phenylester |
| CCPC-34: | trans-(trans-4-Propylcyclohexyl)-cyclohexancarbonsäure -p-(trans-4-butylcyclohexyl)-phenylester |
| CCPC-35: | trans-(trans-4-Propylcyclohexyl)-cyclohexancarbonsäure -p-(trans-4-pentylcyclohexyl)-phenylester |

Beispiel 1

| | |
|---|---|
| PCH-301 | 10.00 |
| PCH-7F | 4.00 |
| EPCH-3OCF$_3$ | 9.00 |
| EPCH-7OCF$_3$ | 5.00 |
| CCP-3OCF$_3$ | 13.00 |
| CCP-5OCF$_3$ | 12.00 |
| ECCP-3OCF$_3$ | 12.00 |
| ECCP-5OCF$_3$ | 8.00 |
| ECCP-3F.F | 12.00 |
| ECCP-3F | 8.00 |
| CBC-33F | 2.00 |
| CCPC-33 | 3.00 |
| CCPC-34 | 2.00 |

Beispiel 2

| | |
|---|---|
| PCH-3OCF$_2$ | 9.00 |
| PCH-5OCF$_2$ | 8.00 |
| PCH-7OCF$_2$ | 9.00 |
| CCH-301 | 7.00 |
| CCP-3OCF$_3$ | 13.00 |
| CCP-5OCF$_3$ | 12.00 |
| ECCP-3OCF$_3$ | 8.00 |
| ECCP-5OCF$_3$ | 6.00 |
| ECCP-3F.F | 9.00 |
| ECCP-3F | 6.00 |
| CCPC-33 | 5.00 |
| CCPC-34 | 4.00 |
| CCPC-35 | 4.00 |

Beispiel 3

| | |
|---|---|
| CCH-301 | 7.00 |
| PCH-5F | 12.00 |
| PCH-7F | 9.00 |
| CCP-3OCF$_3$ | 13.00 |
| CCP-5OCF$_3$ | 12.00 |
| ECCP-3OCF$_3$ | 11.00 |
| ECCP-5OCF$_3$ | 8.00 |
| ECCP-3F.F | 12.00 |
| ECCP-3F | 7.00 |
| CCPC-33 | 3.00 |
| CCPC-34 | 3.00 |
| CCPC-35 | 3.00 |

Beispiel 4

| | |
|---|---|
| PCH-5F | 13.0 |
| PCH-7F | 10.0 |
| CCP-3OCF$_3$ | 13.0 |
| CCP-4OCF$_3$ | 11.0 |
| CCP-5OCF$_3$ | 12.0 |
| ECCP-3OCF$_3$ | 11.0 |
| ECCP-5OCF$_3$ | 8.0 |
| ECCP-3F.F | 9.0 |
| ECCP-5F.F | 6.0 |
| CCPC-33 | 3.0 |
| CCPC-34 | 2.0 |
| CCPC-35 | 2.0 |

Beispiel 5

| | |
|---|---|
| PCH-5F | 11.0 |
| PCH-6F | 4.0 |
| PCH-7F | 10.0 |
| CCP-20CF$_3$ | 9.0 |
| CCP-30CF$_3$ | 13.0 |
| CCP-40CF$_3$ | 7.0 |
| CCP-50CF$_3$ | 11.0 |
| ECCP-30CF$_3$ | 10.0 |
| ECCP-50CF$_3$ | 8.0 |
| ECCP-3F.F | 8.0 |
| CCPC-33 | 3.0 |
| CCPC-34 | 3.0 |
| CCPC-35 | 3.0 |

Beispiel 6

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-30CF$_3$ | 11.0 |
| ECCP-3F.F | 10.0 |
| ECCP-3F | 8.0 |
| CCPC-33 | 3.0 |
| CCPC-34 | 2.0 |
| CCPC-35 | 2.0 |

Beispiel 7

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-30CF$_3$ | 11.0 |
| ECCP-3F.F | 10.0 |
| ECCP-5F.F | 7.0 |
| CCPC-33 | 3.0 |
| CCPC-34 | 3.0 |
| CCPC-35 | 2.0 |

Beispiel 8

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-3F.F | 10.0 |
| ECCP-5F.F | 8.0 |
| ECCP-3F | 11.0 |
| CCPC-33 | 3.0 |
| CCPC-34 | 2.0 |
| CCPC-35 | 2.0 |

Beispiel 9

| | |
|---|---|
| PCH-5F | 12.0 |
| PCH-7F | 10.0 |
| CCP-2OCF$_3$ | 11.0 |
| CCP-3OCF$_3$ | 13.0 |
| CCP-4OCF$_3$ | 7.0 |
| CCP-5OCF$_3$ | 12.0 |
| ECCP-3OCF$_3$ | 9.0 |
| ECCP-3F.F | 9.0 |
| ECCP-5F.F | 5.0 |
| ECCP-3F | 6.0 |
| CCPC-33 | 3.0 |
| CCPC-34 | 2.0 |

Beispiel 10

| | |
|---|---|
| PCH-5F | 12.0 |
| PCH-6F | 9.0 |
| PCH-7F | 10.0 |
| CCP-2OCF$_3$ | 11.0 |
| CCP-3OCF$_3$ | 13.0 |
| CCP-4OCF$_3$ | 5.0 |
| CCP-5OCF$_3$ | 12.0 |
| ECCP-3F.F | 9.0 |
| ECCP-5F.F | 5.0 |
| ECCP-3F | 5.0 |
| CCPC-33 | 3.0 |
| CCPC-34 | 3.0 |
| CCPC-35 | 3.0 |

Beispiel 11

| | |
|---|---|
| PCH-5F | 12.0 |
| PCH-6F | 8.0 |
| PCH-7F | 10.0 |
| CCP-2OCF$_3$ | 11.0 |
| CCP-3OCF$_3$ | 13.0 |
| CCP-4OCF$_3$ | 5.0 |
| CCP-5OCF$_3$ | 12.0 |
| ECCP-3F.F | 11.0 |
| ECCP-5F.F | 8.0 |
| CCPC-33 | 4.0 |
| CCPC-34 | 3.0 |
| CCPC-35 | 3.0 |

Beispiel 12

| | |
|---|---|
| PCH-5F | 10.0 |
| PCH-6F | 5.0 |
| PCH-7F | 7.0 |
| CCP-2OCF$_3$ | 11.0 |
| CCP-3OCF$_3$ | 13.0 |
| CCP-4OCF$_3$ | 6.0 |
| CCP-5OCF$_3$ | 11.0 |
| ECCP-3OCF$_3$ | 7.0 |
| ECCP-5OCF$_3$ | 3.0 |
| ECCP-3F.F | 9.0 |
| ECCP-5F.F | 4.0 |
| ECCP-3F | 7.0 |
| CCPC-33 | 3.0 |
| CCPC-34 | 2.0 |
| CCPC-35 | 2.0 |

Beispiel 13

| | |
|---|---|
| PCH-2 | 9.0 |
| PCH-3 | 22.0 |
| PCH-4 | 4.0 |
| PCH-5F | 12.0 |
| PCH-7F | 11.0 |
| ECCP-3F | 9.0 |
| ECCP-5F | 8.0 |
| CP-3F | 9.0 |
| CP-5F | 7.0 |
| CCPC-33 | 5.0 |
| CCPC-35 | 4.0 |

Beispiel 14

| | |
|---|---|
| PCH-2 | 8.0 |
| PCH-3 | 21.0 |
| PCH-4 | 7.0 |
| PCH-5F | 12.0 |
| PCH-7F | 11.0 |
| ECCP-3F | 9.0 |
| ECCP-5F | 8.0 |
| CP-3F | 9.0 |
| CP-5F | 8.0 |
| CCPC-33 | 4.0 |
| CCPC-34 | 3.0 |

Beispiel 15

| | |
|---|---|
| PCH-3 | 14.00 |
| PCH-5F | 14.00 |
| PCH-7F | 14.00 |
| PCH-53 | 10.00 |
| ECCP-3F | 6.00 |
| ECCP-5F | 6.00 |
| ECCP-$3CF_3$ | 5.00 |
| CCPC-33 | 5.00 |
| CCPC-34 | 5.00 |
| CCPC-35 | 5.00 |
| CBC-33F | 5.00 |
| CBC-53F | 6.00 |
| CBC-55F | 5.00 |

Beispiel 16

| | |
|---|---|
| PCH-5F | 20.00 |
| PCH-6F | 15.00 |
| PCH-7F | 15.00 |
| ECCP-3F | 10.00 |
| ECCP-5F | 10.00 |
| CCPC-33 | 5.00 |
| CCPC-34 | 5.00 |
| CCPC-35 | 5.00 |
| CBC-33F | 5.00 |
| CBC-53F | 5.00 |
| CBC-55F | 5.00 |

**Beispiel 17**

| | |
|---|---|
| PCH-3 | 18.00 |
| PCH-5F | 12.00 |
| PCH-6F | 12.00 |
| PCH-7F | 10.00 |
| ECCP-3F | 7.00 |
| ECCP-5F | 7.00 |
| ECCP-33 | 5.00 |
| CCPC-33 | 5.00 |
| CCPC-34 | 5.00 |
| CCPC-35 | 4.00 |
| CBC-33F | 5.00 |
| CBC-53F | 5.00 |
| CBC-55F | 5.00 |

**Beispiel 18**

| | |
|---|---|
| PCH-3 | 10.00 |
| PCH-5F | 18.00 |
| PCH-6F | 14.00 |
| PCH-7F | 10.00 |
| ECCP-3F | 9.00 |
| ECCP-5F | 7.00 |
| CBC-33 | 5.00 |
| CBC-53 | 6.00 |
| CBC-55 | 5.00 |
| CBC-33F | 5.00 |
| CBC-53F | 6.00 |
| CBC-55F | 5.00 |

Die Eigenschaften der Mischungen aus den Beispielen 1 bis 18 sind in der folgenden Tabelle angegeben:

| Eigenschaft | Beispiel 1 | 2 | 3 | 4 | 5 | 6 | 7 | 8 | 9 |
|---|---|---|---|---|---|---|---|---|---|
| Klärpunkt [°C] | 98 | 99 | 98 | 101 | 99 | 100 | 99 | 98 | 100 |
| Viskosität bei 20° (mPa.s) | 15 | 15 | 15 | | | | | 15 | 15 |
| $\Delta\varepsilon$ | +4,0 | +6,6 | +5,9 | | | | | +4,0 | +4,6 |
| $\varepsilon_{\|\|}$ | 7,0 | | | | | | | 6,8 | 7,5 |
| $V_{(10,0,20)}$ [Volt] | 2,44 | 2,40 | 2,57 | 2,52 | 2,27 | 2,29 | 2,20 | 2,26 | 2,27 |

| Eigenschaft | Beispiel 10 | 11 | 12 | 13 | 14 | 15 | 16 | 17 | 18 |
|---|---|---|---|---|---|---|---|---|---|
| Klärpunkt [°C] | 86 | 88 | 100 | 75 | 72 | 94 | 88 | 93 | 92 |
| Viskosität bei 20° (mPa.s) | 14 | 14 | 15 | 17 | 16 | 17 | 15 | 17 | |
| $\Delta\varepsilon$ | +4,0 | +4,0 | +3,9 | +7,9 | +7,9 | +4,6 | +2,7 | +5,2 | |
| $\varepsilon_{\|\|}$ | 6,9 | 7,0 | 6,6 | 11,9 | 11,9 | 7,6 | | 8,4 | |
| $V_{(10,0,20)}$ [Volt] | 2,13 | 2,20 | 2,33 | 1,56 | 1,48 | 2,15 | 2,98 | 2,03 | 2,23 |

Im folgenden sind weitere erfindungsgemäße Mischungen angegeben:

Beispiel 19

| | |
|---|---|
| CCH-301 | 7.00 |
| PCH-5F | 12.00 |
| PCH-7F | 9.00 |
| CCP-3F.F | 13.00 |
| CCP-5F.F | 12.00 |
| ECCP-3OCF$_3$ | 11.00 |
| ECCP-5OCF$_3$ | 8.00 |
| ECCP-3F.F | 12.00 |
| ECCP-3F | 7.00 |
| CCPC-33 | 3.00 |
| CCPC-34 | 3.00 |
| CCPC-35 | 3.00 |

Beispiel 20

| | |
|---|---|
| PCH-5F | 13.0 |
| PCH-7F | 10.0 |
| CCP-3OCF$_3$ | 13.0 |
| CCP-4OCF$_3$ | 11.0 |
| CCP-5OCF$_3$ | 12.0 |
| ECCP-3OCF$_3$ | 11.0 |
| ECCP-5OCF$_3$ | 8.0 |
| CCP-3F.F | 9.0 |
| CCP-5F.F | 6.0 |
| CCPC-33 | 3.0 |
| CCPC-34 | 2.0 |
| CCPC-35 | 2.0 |

Beispiel 21

| | |
|---|---|
| PCH-5F | 11.0 |
| PCH-6F | 4.0 |
| PCH-7F | 10.0 |
| CCP-2OCF$_3$ | 9.0 |
| CCP-3OCF$_3$ | 13.0 |
| CCP-4OCF$_3$ | 7.0 |
| CCP-5OCF$_3$ | 11.0 |
| CCP-2F.F | 10.0 |
| CCP-5F.F | 8.0 |
| CCP-3F.F | 8.0 |
| CCPC-33 | 3.0 |
| CCPC-34 | 3.0 |
| CCPC-35 | 3.0 |

Beispiel 22

| | |
|---|---|
| PCH-3 | 14.00 |
| PCH-5F | 14.00 |
| PCH-7F | 14.00 |
| PCH-53 | 10.00 |
| CCP-3F | 6.00 |
| CCP-5F | 6.00 |
| CCP-3F.F | 5.00 |
| CCPC-33 | 5.00 |
| CCPC-34 | 5.00 |
| CCPC-35 | 5.00 |
| CBC-33F | 5.00 |
| CBC-53F | 6.00 |
| CBC-55F | 5.00 |

**Beispiel 23**

| | |
|---|---|
| PCH-5F | 20.00 |
| PCH-6F | 15.00 |
| PCH-7F | 15.00 |
| CCP-3F.F | 10.00 |
| CCP-5F.F | 10.00 |
| CCPC-33 | 5.00 |
| CCPC-34 | 5.00 |
| CCPC-34 | 5.00 |
| CBC-33F | 5.00 |
| CBC-53F | 5.00 |
| CBC-55F | 5.00 |

**Beispiel 24**

| | |
|---|---|
| PCH-3 | 18.00 |
| PCH-5F | 12.00 |
| PCH-6F | 12.00 |
| PCH-7F | 10.00 |
| CCP-3F.F | 7.00 |
| CCP-5F.F | 7.00 |
| ECCP-33 | 5.00 |
| CCPC-33 | 5.00 |
| CCPC-34 | 5.00 |
| CCPC-35 | 4.00 |
| CBC-33F | 5.00 |
| CBC-53F | 5.00 |
| CBC-55F | 5.00 |

| Beispiel 25 | |
|---|---|
| PCH-3 | 10.00 |
| PCH-5F | 18.00 |
| PCH-6F | 14.00 |
| PCH-7F | 10.00 |
| CCP-3F.F | 9.00 |
| CCP-5F.F | 7.00 |
| CCPC-33 | 5.00 |
| CCPC-34 | 6.00 |
| CCPC-35 | 5.00 |
| CBC-33F | 5.00 |
| CBC-53F | 6.00 |
| CBC-55F | 5.00 |

## Patentansprüche

**1.** Matrix-Flüssigkristallanzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

dadurch gekennzeichnet, daß die Flüssigkristallmischung auf folgenden Komponenten basiert:

a) bis zu 96 Gew.% einer flüssigkristallinen Komponente B bestehend aus einer oder mehreren Verbindungen mit einer dielektrischen Anisotropie von über +1,5,

b) 0 bis 70 Gew.% einer flüssigkristallinen Komponente A bestehend aus einer oder mehreren Verbindungen mit einer dielektrischen Anisotropie von -1,5 bis +1,5 der allgemeinen Formel I

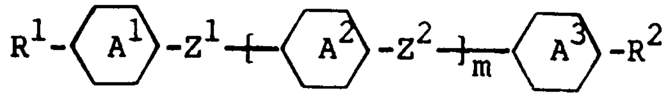

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$ oder eine Einfachbindung, und |
| m | 0, 1 oder 2 bedeutet, |

c) 0 bis 20 Gew.% einer flüssigkristallinen Komponente C bestehend aus einer oder mehreren Verbindungen mit einer dielektrischen Anisotropie von unter -1,5, und

d) 4 bis 15 Gew.% einer hochklärenden Komponente D bestehend aus einer oder mehreren Verbindungen der Formel

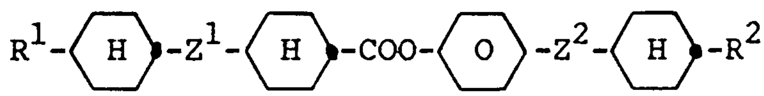

worin $R^1$, $R^2$, $Z^1$ und $Z^2$ die bei Formel I angegebene Bedeutung haben,

und die nematische Flüssigkristallmischung einen nematischen Phasenbereich von mindestens 60 °C und eine Viskosität bei 20 °C von maximal 30 mPa.s aufweist.

**2.** Anzeige nach Anspruch 1, dadurch gekennzeichnet, daß Komponente B im wesentlichen aus nitrilhaltigen Verbindungen besteht.

**3.** Anzeige nach Anspruch 1, dadurch gekennzeichnet, daß Komponente B nitrilhaltige und nitrilfreie, fluorierte Verbindungen enthält.

**4.** Anzeige nach Anspruch 1, dadurch gekennzeichnet, daß Komponente B im wesentlichen aus nitrilfreien, fluorierten Verbindungen besteht.

**5.** Anzeige nach einem der Ansprüche 1 bis 4, dadurch gekennzeichnet, daß Komponente B eine oder mehrere Verbindungen ausgewählt aus der Gruppe bestehend aus Verbindungen der Formeln IIa bis IIf enthält,

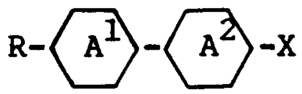 IIa

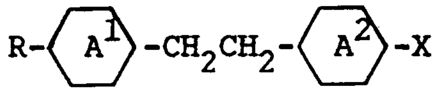 IIb

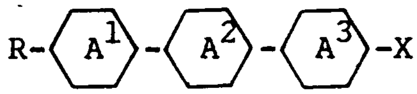 IIc

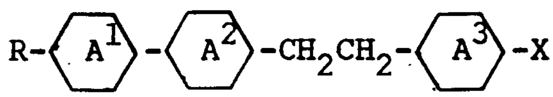 IId

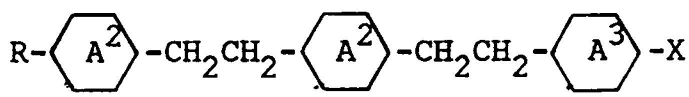 IIe

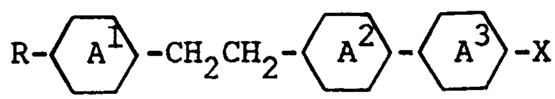 IIf

worin

| | |
|---|---|
| R | n-Alkyl oder n-Alkenyl mit bis zu 9 C-Atomen, |
| X | Cyan, -NCS, F, Cl, $CF_3$, $-CHF_2$, $-OCF_3$, $-OCHF_2$, $-OCF_2CF_2H$ oder $-OC_2F_5$, und |
| die Ringe $A^1$, $A^2$ und $A^3$ | jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen |

bedeuten.

**6.** Anzeige nach Anspruch 5, dadurch gekennzeichnet, daß Komponente B Verbindungen der Formeln IIa bis IIf, worin X Cyan bedeutet, und Verbindungen der Formeln IIa bis IIf, worin X -NCS, F, Cl, $-CF_3$, $-CHF_2$, $-OCF_3$, $OCHF_2$, $-OCF_2CF_2H$ oder $-OC_2F_5$ bedeutet, enthält und der Anteil der Cyanverbindungen in Komponente B 0 bis 50 Gew.% beträgt.

**7.** Anzeige nach Anspruch 6, dadurch gekennzeichnet, daß Komponente B keine Verbindungen der Formeln IIa bis IIf, worin X Cyan bedeutet, enthält.

**8.** Anzeige nach mindestens einem der Ansprüche 5 bis 7, dadurch gekennzeichnet, daß X F, Cl, $CF_3$, $-OCF_3$, $-OCHF_2$ oder $CHF_2$ bedeutet.

**9.** Anzeige nach mindestens einem der Ansprüche 1 bis 8, dadurch gekennzeichnet, daß Komponente A eine oder mehrere Verbindungen ausgewählt aus der Gruppe bestehend aus II1 bis II7 enthält:

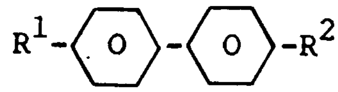

II1

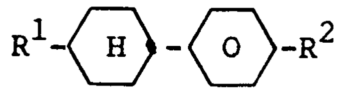

II2

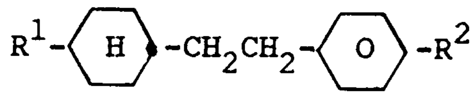

II3

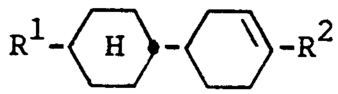

II4

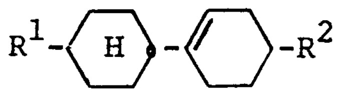

II5

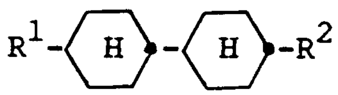

II6

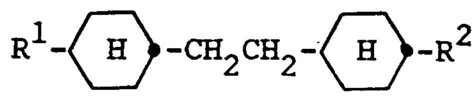

II7

worin $R^1$ und $R^2$ die in Anspruch 1 angegebene Bedeutung haben.

**10.** Anzeige nach Anspruch 9, dadurch gekennzeichnet, daß Komponente A zusätzlich eine oder mehrere Verbindungen ausgewählt aus der Gruppe bestehend aus II8 bis II20 enthält:

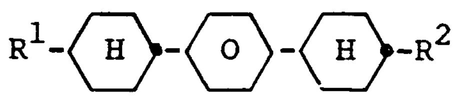

II8

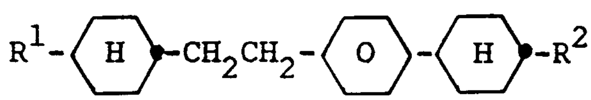

II9

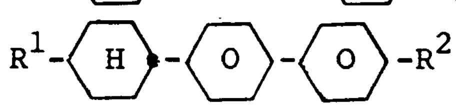

II10

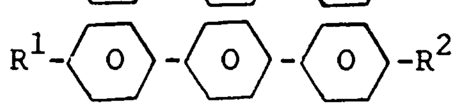

II11

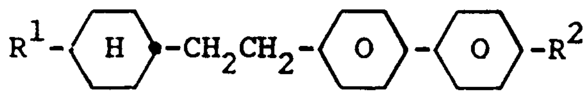 II12

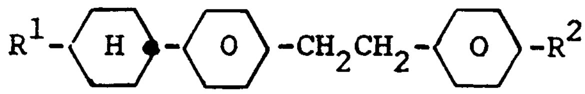 II13

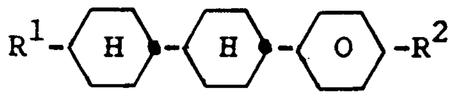 II14

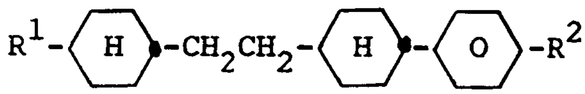 II15

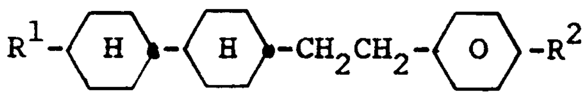 II16

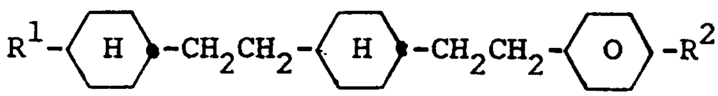 II17

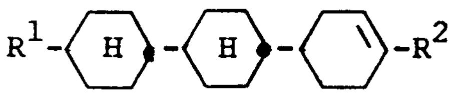 II18

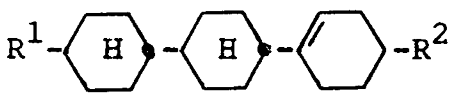 II19

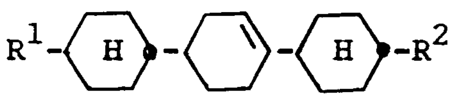 II20

worin $R^1$ und $R^2$ die in Anspruch 1 angegebene Bedeutung haben und die 1,4-Phenylengruppen in II8 bis II17 jeweils unabhängig voneinander auch durch Fluor ein- oder mehrfach substituiert sein können.

**11.** Anzeige nach Anspruch 9 oder 10, dadurch gekennzeichnet, daß Komponente A zusätzlich eine oder mehrere Verbindungen ausgewählt aus der Gruppe bestehend aus II21 bis II25 enthält:

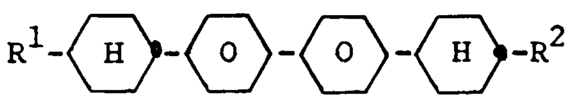 II21

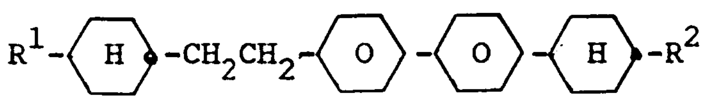 II22

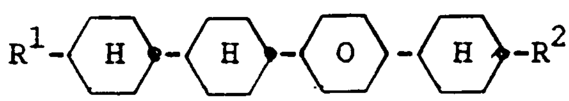 II23

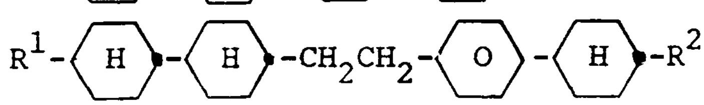 II24

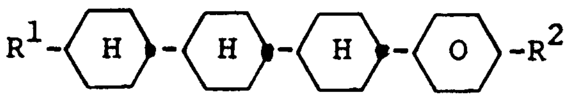 II25

worin $R^1$ und $R^2$ die in Anspruch 1 angegebene Bedeutung haben und die 1,4-Phenylengruppen in II21

bis II25 jeweils unabhängig voneinander auch durch Fluor ein- oder mehrfach substituiert sein können.

**12.** Anzeige nach mindestens einem der Ansprüche 1 bis 11, dadurch gekennzeichnet, daß Komponente A eine oder mehrere Verbindungen ausgewählt aus der Gruppe bestehend aus II26 und II27 enthält:

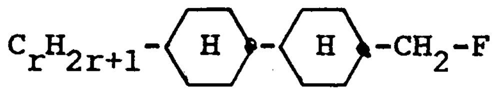 II26

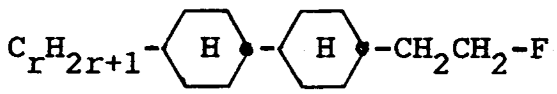 II27

worin $C_rH_{2r+1}$ eine geradkettige Alkylgruppe mit bis zu 7 C-Atomen ist.

**13.** Anzeige nach mindestens einem der Ansprüche 1 bis 12, dadurch gekennzeichnet, daß die Flüssigkristallmischung neben den Komponenten A, B und C zusätzlich eine oder mehrere Verbindungen ausgewählt aus der Gruppe bestehend aus III und IV enthält:

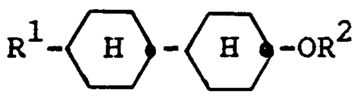 III

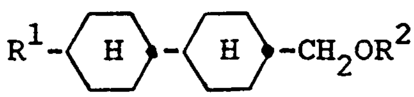 IV

worin $R^1$ und $R^2$ die in Anspruch 1 angegebene Bedeutung haben.

**14.** Anzeige nach mindestens einem der Ansprüche 1 bis 13, dadurch gekennzeichnet, daß die Flüssigkristallmischung neben den Komponenten A, B und C zusätzlich eine oder mehrere Verbindungen der Formel

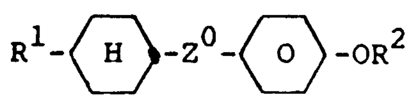

enthält,
worin

$R^1$ und $R^2$ die in Anspruch 1 angegebene Bedeutung haben und

$Z^0$ eine Einfachbindung, $-CH_2CH_2-$,

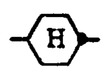 oder 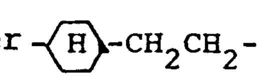

bedeutet.

**15.** Anzeige nach mindestens einem der Ansprüche 1-14, dadurch gekennzeichnet, daß die Flüssigkristallmischung neben den Komponenten A, B und C zusätzlich eine oder mehrere Verbindungen ausgewählt aus der Gruppe bestehend aus V und VI enthält:

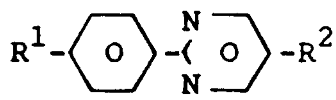

V

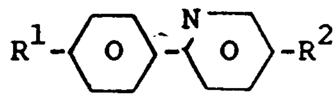

VI

worin $R^1$ und $R^2$ die in Anspruch 1 angegebene Bedeutung haben.

**16.** Anzeige nach mindestens einem der Ansprüche 1-15, dadurch gekennzeichnet, daß die Flüssigkristallmischung neben den Komponenten A, B und C zusätzlich eine oder mehrere Verbindungen ausgewählt aus der Gruppe bestehend aus VII bis XI enthält:

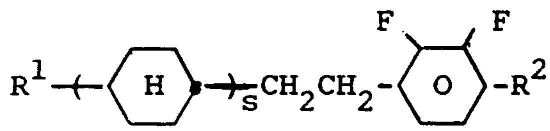

VII

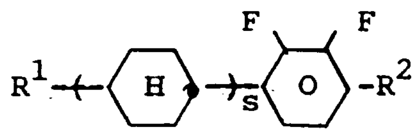

VIII

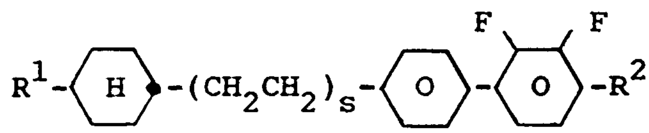

IX

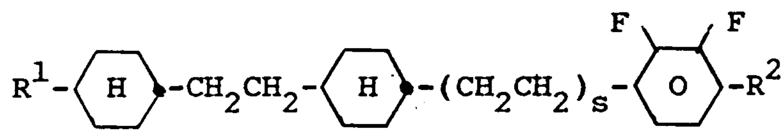

X

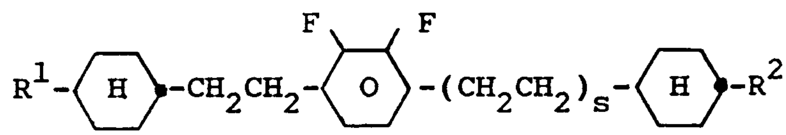

XI

worin

| | |
|---|---|
| $R^1$ und $R^2$ | die in Anspruch 1 angegebene Bedeutung haben und |
| S | 0 oder 1 ist. |

**17.** Flüssigkristallmischung der in einem der Ansprüche 1 bis 16 definierten Zusammensetzung.

## Claims

**1.** Liquid-crystal matrix display having

- two plane-parallel carrier plates which, together with a frame, form a cell,
- integrated nonlinear components for switching individual image points on the carrier plates, and
- a nematic liquid-crystal mixture contained in the cell and having positive dielectric anisotropy and high specific resistance,

characterized in that the liquid-crystal mixture is based on the following components:

a) up to 96 % by weight of a liquid-crystalline component B composed of one or more compounds having a dielectric anisotropy of more than +1.5,

b) 0 to 70 % by weight of a liquid-crystalline component A composed of one or more compounds having a dielectric anisotropy of -1.5 to +1.5 of the general formula I:

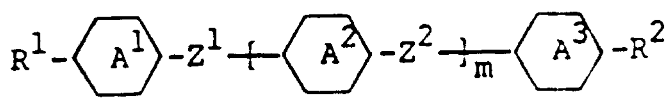 I

in which

| | |
|---|---|
| $R^1$ and $R^2$ | are, in each case independently of each other, n-alkyl, ω-fluoroalkyl or n-alkenyl containing up to 9 carbon atoms, |
| the rings $A^1$, $A^2$ and $A^3$ | are, in each case independently of each other, 1,4-phenylene, 2- or 3-fluoro-1,4-phenylene, trans-1,4-cyclohexylene or 1,4-cyclohexenylene, |
| $Z^1$ and $Z^2$ | are, in each case independently of each other, $-CH_2CH_2-$ or a single bond, and |
| m | is 0, 1 or 2, |

c) 0 to 20 % by weight of a liquid-crystalline component C composed of one or more compounds having a dielectric anisotropy of less than -1.5, and

d) 4 to 15 % by weight of a highly clarifying component D composed of one or more compounds of the formula:

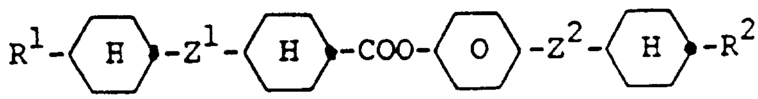

in which $R^1$, $R^2$, $Z^1$ and $Z^2$ have the meaning specified in the case of formula I,

and the nematic liquid-crystal mixture has a nematic phase range of at least 60°C and a viscosity at 20 °C of not more than 30 mPa.s.

**2.** Display according to Claim 1, characterized in that component B is composed essentially of nitrile-containing compounds.

**3.** Display according to Claim 1, characterized in that component B contains nitrile-containing and nitrile-free fluorinated compounds.

**4.** Display according to Claim 1, characterized in that component B is composed essentially of nitrile-free fluorinated compounds.

**5.** Display according to one of Claims 1 to 4, characterized in that component B contains one or more compounds selected from the group comprising compounds of the formulae IIa to IIf:

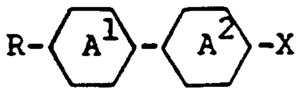

IIa

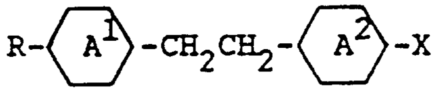

IIb

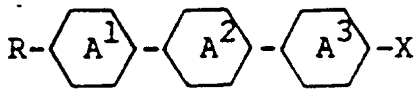

IIc

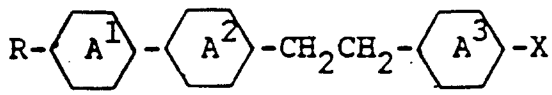

IId

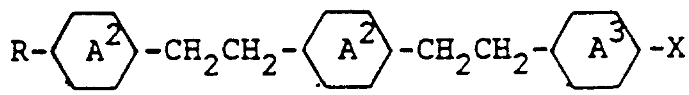

IIe

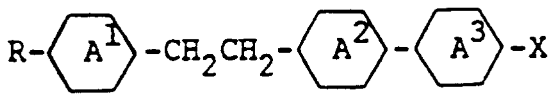

IIf

in which

| | |
|---|---|
| R | is n-alkyl or n-alkenyl containing up to 9 carbon atoms, |
| X | is cyano, -NCS, F, Cl, $CF_3$, $-CHF_2$, $-OCF_3$, $-OCHF_2$, $-OCF_2CF_2H$ or $-OC_2F_5$, and |
| the rings $A^1$, $A^2$ and $A^3$ | are, in each case independently of each other, 1,4-phenylene, 2- or 3-fluoro-1,4-phenylene, 2,3-difluoro-1,4-phenylene, trans-1,4-cyclohexylene or 1,4-cyclohexenylene. |

6. Display according to Claim 5, characterized in that component B contains compounds of the formulae IIa to IIf in which X is cyano and compounds of the formulae IIa to IIf in which X is -NCS, F, Cl, $-CF_3$, $-CHF_2$, $-OCF_3$, $OCHF_2$, $-OCF_2CF_2H$ or $-OC_2F_5$, and the proportion of the cyano compounds in component B is 0 to 50 % by weight.

7. Display according to Claim 6, characterized in that component B contains no compounds of the formulae IIa to IIf in which X is cyano.

8. Display according to at least one of Claims 5 to 7, characterized in that X is F, Cl, $CF_3$, $-OCF_3$, $-OCHF_2$ or $CHF_2$.

9. Display according to at least one of Claims 1 to 8, characterized in that component A contains one or more compounds selected from the group comprising II1 to II7:

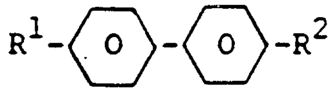

II1

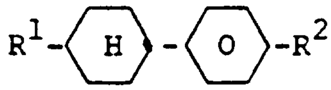

II2

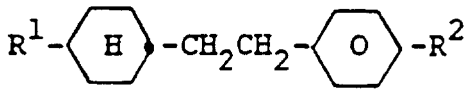

II3

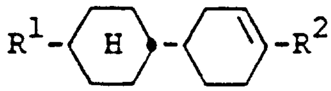

II4

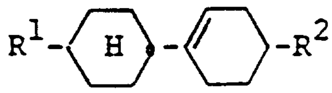

II5

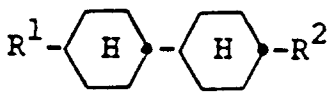

II6

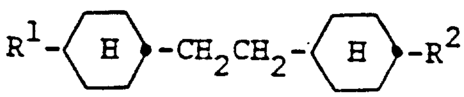

II7

in which $R^1$ and $R^2$ have the meaning specified in Claim 1.

**10.** Display according to Claim 9, characterized in that component A additionally contains one or more compounds selected from the group comprising II8 to II20:

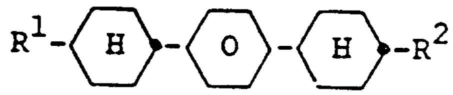

II8

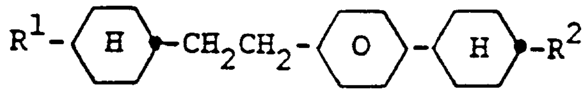

II9

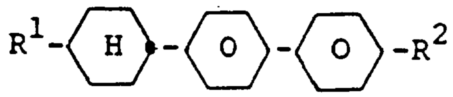

II10

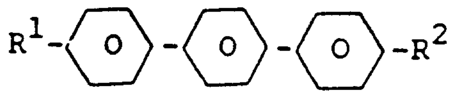

II11

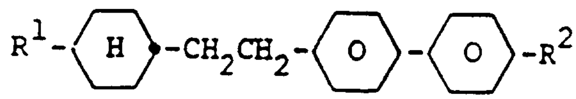

II12

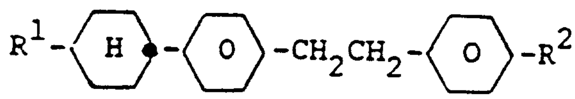

II13

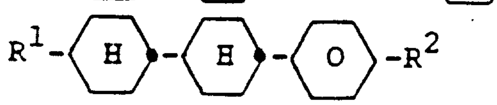

II14

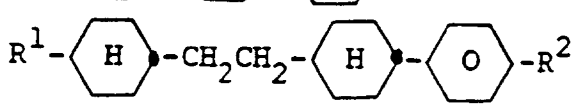

II15

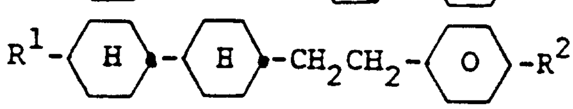

II16

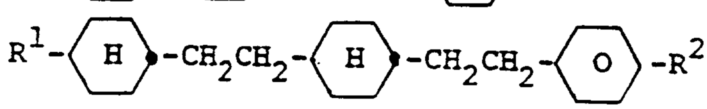

II17

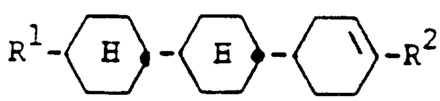

II18

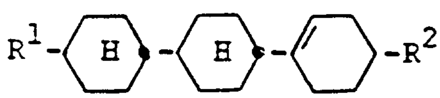

II19

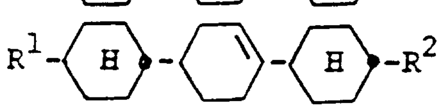

II20

in which $R^1$ and $R^2$ have the meaning specified in Claim 1 and the 1,4-phenylene groups in II8 to II17 may, in each case independently of each other, also be mono- or polysubstituted by fluorine.

**11.** Display according to Claim 9 or 10, characterized in that component A additionally contains one or more compounds selected from the group comprising II21 to II25:

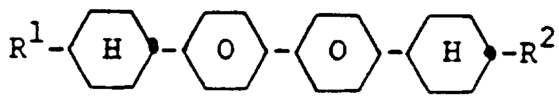 II21

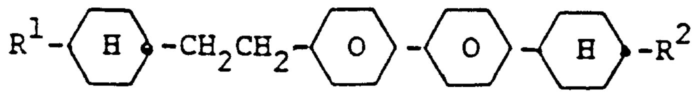 II22

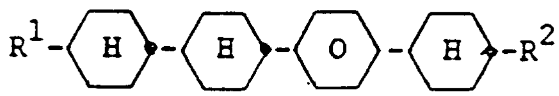 II23

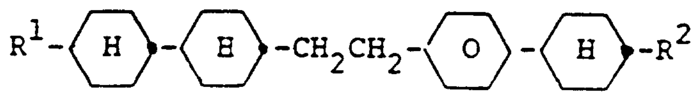 II24

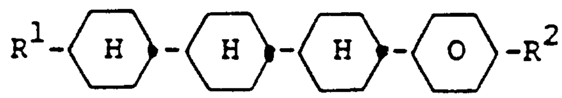 II25

in which $R^1$ and $R^2$ have the meaning specified in Claim 1 and the 1,4-phenylene groups in II21 to II25 may, in each case independently of each other, also be mono- or polysubstituted by fluorine.

**12.** Display according to at least one of Claims 1 to 11, characterized in that component A contains one or more compounds selected from the group comprising II26 and II27:

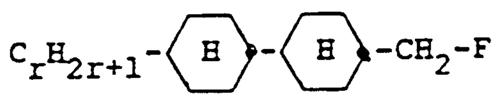 II26

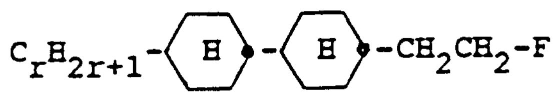 II27

in which $C_rH_{2r+1}$ is a straight-chain alkyl group containing up to 7 carbon atoms.

**13.** Display according to at least one of Claims 1 to 12, characterized in that the liquid-crystal mixture contains, in addition to the components A, B and C, additionally one or more compounds selected from the group comprising III and IV:

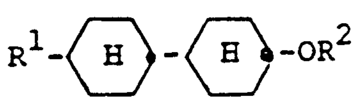 III

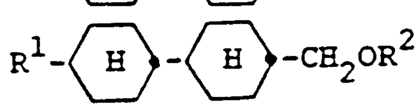 IV

in which $R^1$ and $R^2$ have the meaning specified in Claim 1.

**14.** Display according to at least one of Claims 1 to 13, characterized in that the liquid-crystal mixture contains, in addition to the components A, B and C, additionally one or more compounds of the formula:

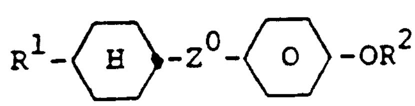

in which

$R^1$ and $R^2$ have the meaning specified in Claim 1 and

$Z^0$ is a single bond, $-CH_2CH_2-$,

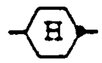 or 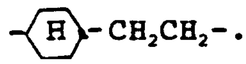

**15.** Display according to at least one of Claims 1-14, characterized in that the liquid-crystal mixture contains, in addition to the components A, B and C, additionally one or more compounds selected from the group comprising V and VI:

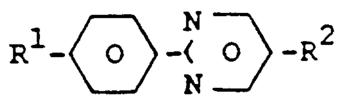 V

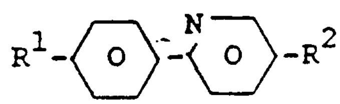 VI

in which $R^1$ and $R^2$ have the meaning specified in Claim 1.

**16.** Display according to at least one of Claims 1-15, characterized in that the liquid-crystal mixture contains, in addition to the components A, B and C, additionally one or more compounds selected from the group comprising VII to XI:

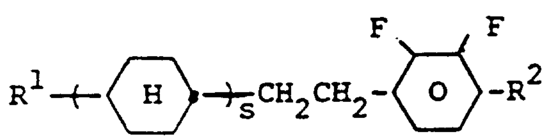 VII

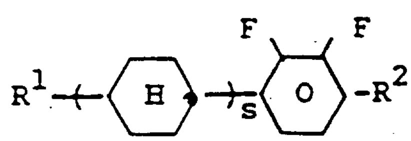 VIII

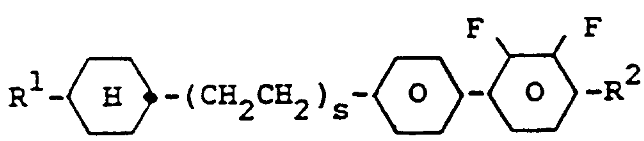 IX

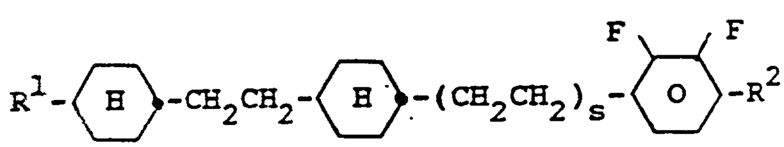 X

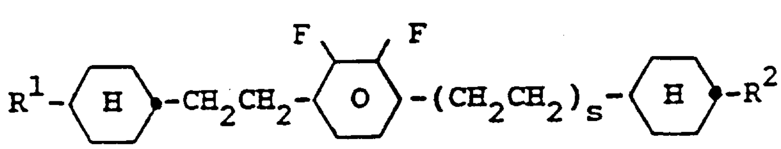 XI

in which

$R^1$ and $R^2$ have the meaning specified in Claim 1

and
s is 0 or 1.

**17.** Liquid-crystal mixture of the composition defined in one of Claims 1 to 16.

**Revendications**

**1.** Affichage à cristaux liquides matriciel comprenant

- deux plaques support à plans parallèles, qui forment avec une bordure une cellule,
- des éléments non linéaires intégrés pour le montage de points d'images isolés sur les plaques support et
- un mélange de cristaux liquides nématique se trouvant dans la cellule à anisotropie diélectrique positive et à résistance spécifique élevée,

caractérisé en ce que le mélange de cristaux liquides est à base des composants suivants :

a) jusqu'à 96 % en poids d'un composant B à cristaux liquides constitué d'un ou plusieurs composés ayant une anisotropie diélectrique supérieure à +1,5 ,

b) de 0 à 70 % en poids d'un composant A à cristaux liquides constitué d'un ou plusieurs composés ayant une anisotropie diélectrique comprise entre -1,5 et +1,5 de formule générale I :

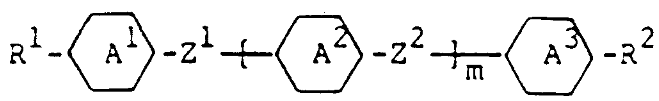
I

dans laquelle
$R^1$ et $R^2$ représentent chacun indépendamment l'un de l'autre un n-alkyle, un ω-fluoroalkyle ou un n-alcényle ayant jusqu'à 9 atomes de carbone,
les noyaux $A^1$, $A^2$ et $A^3$ représentent chacun indépendamment l'un de l'autre un 1,4-phénylène, 2- ou 3-fluoro-1,4-phénylène, trans-1,4-cyclohexylène ou 1,4-cyclo-hexylène,
$Z^1$ et $Z^2$ représentent chacun indépendamment l'un de l'autre $-CH_2CH_2-$ ou une liaison simple,
et
m vaut 0, 1 ou 2,

c) de 0 à 20 % en poids d'un composant C à cristaux liquides constitué d'un ou plusieurs composés ayant une anisotropie diélectrique inférieure à -1,5 et,

d) de 4 à 15 % en poids d'un composant D très éclairant constitué d'un ou plusieurs composés de formule

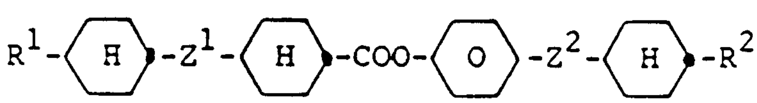

dans laquelle $R^1$ ,$R^2$, $Z^1$ et $Z^2$ ont la signification donnée pour la formule I,
et le mélange de cristaux liquides nématique présente un domaine de phase nématique d'au moins 60 °C et une vicosité à 20°C d'au plus 30 mPa.s.

**2.** Affichage selon la revendication 1, caractérisé en ce que le composant B est constitué pour l'essentiel de composés contenant un nitrile.

**3.** Affichage selon la revendication 1, caractérisé en ce que le composant B contient des composés fluorés contenant un nitrile et des composés fluorés ne contenant pas de nitrile.

**4.** Affichage selon la revendication 1, caractérisé en ce que le composant B est constitué pour l'essentiel de composés fluorés contenant un nitrile.

**5.** Affichage selon l'une des revendications 1 à 4, caractérisé en ce que le composant a contient un ou plusieurs composés fournis dans le groupe constitué par les composés de formule IIa à IIf,

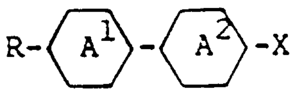

IIa

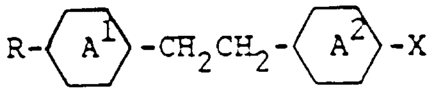

IIb

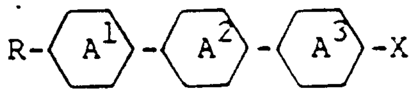

IIc

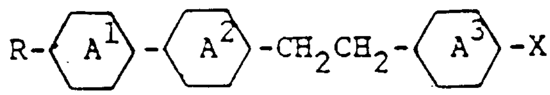

IId

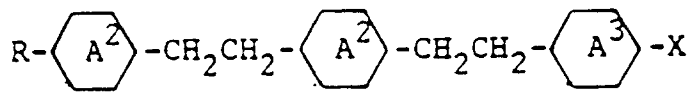

IIe

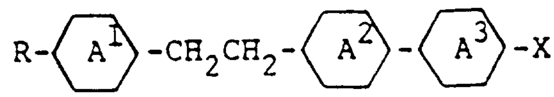

IIf

dans lesquels
R représente un n-alkyle ou un n-alcényle ayant jusqu'à 9 atomes de carbone,
X représente un cyano, -NCS, F, Cl, $CF_3$, $-CHF_2$, $-OCF_3$, $-OCHF_2$, $-OCF_2CF_2H$ ou $-OC_2F_5$,
et
les noyaux $A^1$, $A^2$ et $A^3$ représentent chacun indépendamment l'un de l'autre un 1,4-phénylène, 2- ou 3-fluoro-1,4-phénylène, 2,3-difluoro-1,4-phénylène, trans-1,4-cyclohexylène ou 1,4-cyclohexylène.

**6.** Affichage selon la revendication 5, caractérisé en ce que le composant B contient des composés de formule IIa à IIf, où X représente un cyano, et des composés de formule IIa à IIf, où X représente -NCS, F, Cl, $-CF_3$, $-CHF_2$, $-OCF_3$, $OCHF_2$, $-OCF_2CF_2H$ ou $-OC_2F_5$ , et en ce que la proportion des composés cyano dans le composant B est comprise entre 0 et 50 % en poids.

**7.** Affichage selon la revendication 6, caractérisé en ce que le composant B ne contient pas de composés de formule IIa à IIf où X représente un cyano.

**8.** Affichage selon au moins l'une des revendications 5 à 7, caractérisé en ce que X représente F, Cl, $CF_3$, $-OCF_3$, $-OCHF_2$ ou $CHF_2$.

**9.** Affichage selon au moins l'une des revendications 1 à 8, caractérisé en ce que le composant A contient un ou plusieurs composés choisis dans le groupe constitué par II1 à II7 :

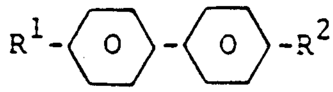 II1

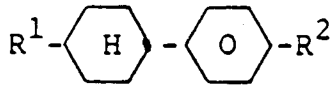 II2

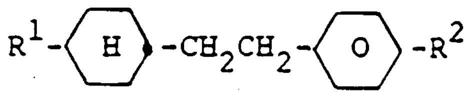 II3

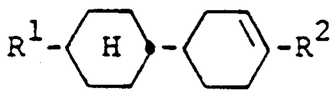 II4

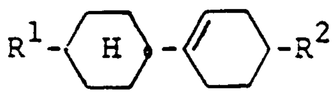 II5

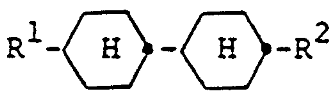 II6

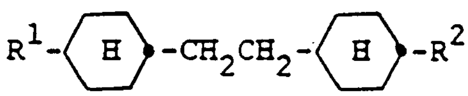 II7

dans lesquels $R^1$ et $R^2$ ont la signification donnée dans la revendication 1.

**10.** Affichage selon la revendication 9, caractérisé en ce que le composant A contient en outre un ou plusieurs composés choisis dans le groupe constitué par II8 à II20:

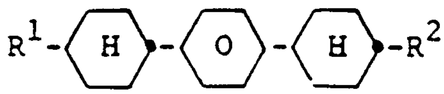 II8

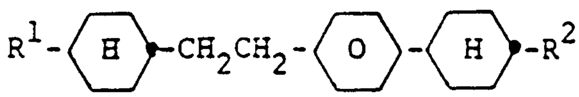 II9

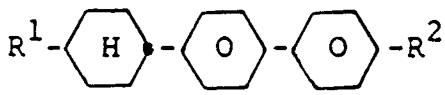 II10

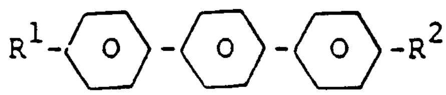 II11

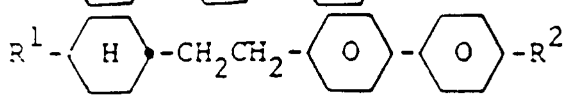 II12

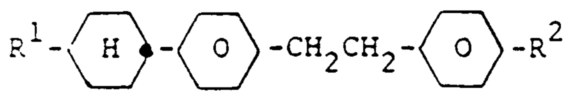 II13

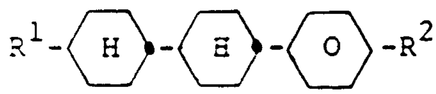 II14

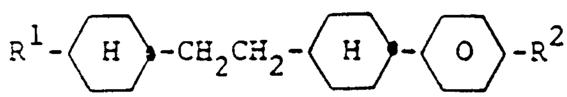 II15

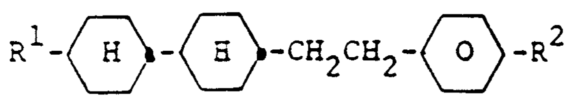 II16

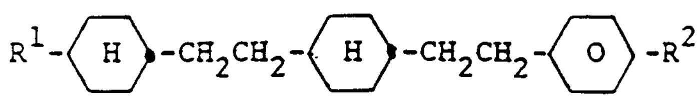 II17

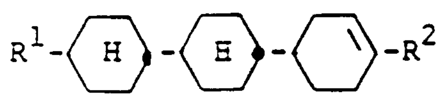 II18

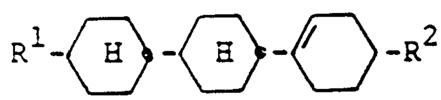 II19

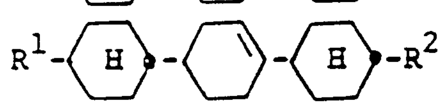 II20

où $R^1$ et $R^2$ ont la signification donnée dans la revendication 1 et les groupes 1,4-phénylène dans II8 à II17 peuvent être également chacun mono- ou polysubstitué indépendamment l'un de l'autre par un fluor.

**11.** Affichage selon la revendication 9 ou 10, caractérisé en ce que le composant A contient en outre un ou plusieurs composés choisis dans le groupe constitué par II21 à II25 :

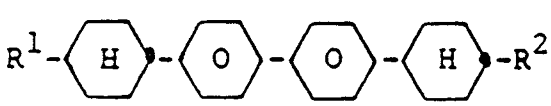 II21

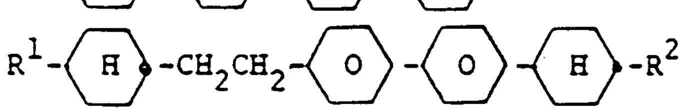 II22

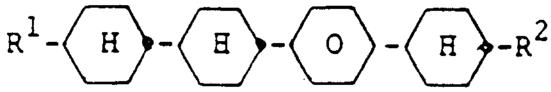 II23

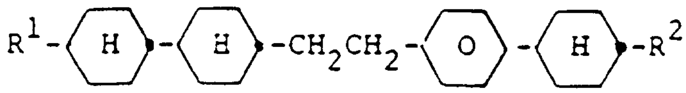 II24

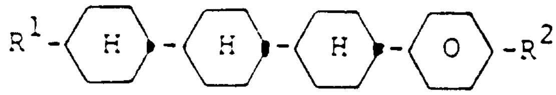 II25

où $R^1$ et $R^2$ ont la signification donnée dans la revendication 1 et les groupes 1,4-phénylène dans II21 à II25 peuvent également être mono- ou poly-substitués indépendamment l'un de l'autre.

**12.** Affichage selon au moins l'une des revendications 1 à 11, caractérisé en ce que le composant A contient un ou plusieurs composés choisis dans le groupe constitué par II26 à II27 :

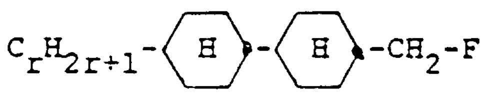 II26

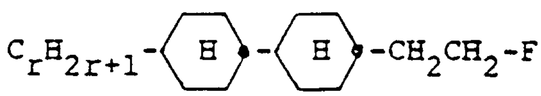 II27

où $C_rH_{2r+1}$ est un groupe alkyle à chaîne droite ayant jusqu'à 7 atomes de carbone.

**13.** Affichage selon au moins l'une des revendications 1 à 12, caractérisé en ce que le mélange de cristaux liquides contient, outre les composants A, B et C, un ou plusieurs composés choisis dans le groupe constitué par III et IV :

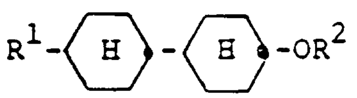 III

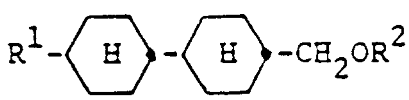 IV

où $R^1$ et $R^2$ ont la signification donnée dans la revendication 1.

**14.** Affichage selon au moins l'une des revendications 1 à 13, caractérisé en ce que le mélange de cristaux liquides contient, outre les composants A, B, et C, un ou plusieurs composés de formule :

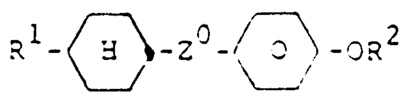

où $R^1$ et $R^2$ ont la signification donnée dans la revendication 1
et
$Z^0$ représente une liaison simple, $-CH_2CH_2-$,

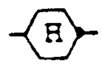 ou 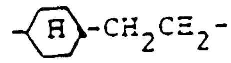

**15.** Affichage selon au moins une des revendications 1 à 14, caractérisé en ce que le mélange de cristaux liquides contient, outre les composants A, B etC, un ou plusieurs composés choisis dans le groupe constitué par V et VI :

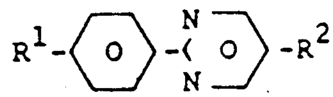
V

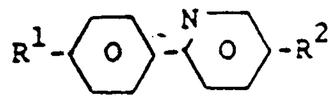
VI

où $R^1$ et $R^2$ ont la signification donnée dans la revendication 1.

**16.** Affichage selon au moins une des revendications 1 à 15, caractérisé en ce que le mélange de cristaux liquides contient, outre les composants A, B, et C, un ou plusieurs composés choisis dans le groupe constitué

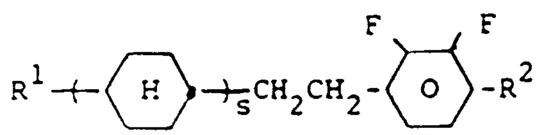
VII

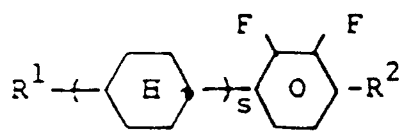
VIII

par VII à XI :

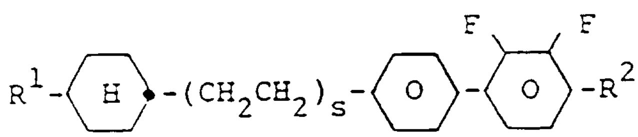
IX

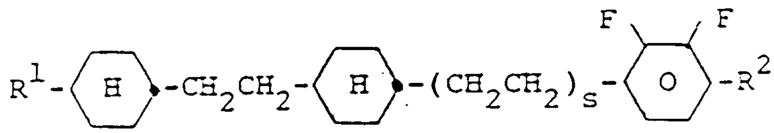
X

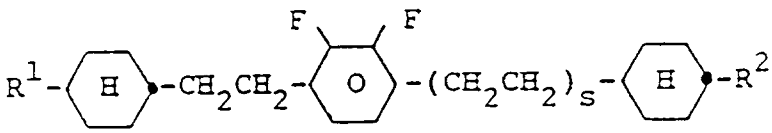
XI

où
$R^1$ et $R^2$ ont la signification donnée dans la revendication 1
et
S vaut 0 ou 1.

**17.** Mélange de cristaux liquides de la composition décrite dans une des revendications 1 à 16.